# EUROPÄISCHE PATENTSCHRIFT

(11) **EP 0 724 092 B1**
(45) Veröffentlichungstag und Bekanntmachung des Hinweises auf die Patenterteilung: **22.07.1998**
(21) Anmeldenummer: 95118411.8
(22) Anmeldetag: 23.11.1995
(51) Int. Cl.: F16F 15/131

(54) **Zweimassenschwungrad mit motorseitig angeordneter Druckplatte**
Two mass flywheel with pressure plate located on the motor side
Volant à deux masses avec plateau de pression à côté du moteur

(30) Priorität: 27.01.1995 DE 19502617
(43) Veröffentlichungstag der Anmeldung: 31.07.1996
(73) Patentinhaber: Mannesmann Sachs Aktiengesellschaft, 97424 Schweinfurt (DE)
(72) Erfinder: Schierling, Bernhard, Dipl.-Ing.(FH), D-97273 Kürnach (DE); Göbel, Hilmar, D-97506 Grafenrheinfeld (DE)

(56) Entgegenhaltungen:
- DE-A- 2 924 234
- DE-A- 3 347 913
- DE-A- 4 214 655
- DE-U- 9 414 314
- FR-A- 2 428 176

## Beschreibung

Die Erfindung betrifft ein Zweimassenschwungrad gemäß dem Oberbegriff des Anspruchs 1.

Durch die DE 33 35 982 A1 ist ein Zweimassenschwungrad bekannt, bei welchem zwei Schwungmassen vorhanden sind, von denen sich eine an einer Seite einer Federeinrichtung der Torsionsdämpfereinrichtung abstützt und die andere an deren Gegenseite. Die beiden Schwungmassen sind drehbar zueinander gelagert, wobei die abtriebsseitige zweite Schwungmasse zur Aufnahme einer Anfahr- und Schaltkupplung dient, die mit einer Kupplungsscheibe versehen ist, die ihre Auflagestelle auf einer abtriebsseitigen Getriebewelle aufweist und in eingerücktem Zustand unter der Wirkung einer eine Druckplatte in der einer Gegendruckplatte zugewandten Richtung belastenden Anpreßfeder steht. Gemäß der Beschreibung ist eine Ausrückvorrichtung zum Aufheben der Wirkung der Anpreßfeder vorgesehen, deren Ausrücker radial innerhalb der Auflagestelle der Kupplungsscheibe die Getriebewelle in Richtung zur antriebsseitigen ersten Schwungmasse durchgreift und mit der Anpreßfeder über einen Ausrückteller in Wirkverbindung bringbar ist.

Die zweite Schwungmasse dient zur drehfesten Aufnahme der Druckplatte, die in Umfangsrichtung synchron zur Gegendruckplatte bewegbar ist, wobei die Druckplatte die antriebsseitige Platte und die Gegendruckplatte die abtriebsseitige Platte bildet. Die die Druckplatte belastende Anpreßfeder ist antriebsseitig in Achsrichtung zwischen der ersten Schwungmasse und der Druckplatte angeordnet und an einer Abstützung der zweiten Schwungmasse aufgelagert. Sie beaufschlagt die Druckplatte mit einer Axialkraft in einer der Getriebewelle zugewandten Richtung.

Bei einem derartigen Torsionsschwingungsdämpfer ist zwar innerhalb der Getriebeglocke im Bereichradial außerhalb der Getriebewelle kein Raum für die Unterbringung der Ausrückvorrichtung erforderlich, was insbesondere bei Kraftfahrzeugen mit wenig Eauraum in der Getriebeglocke von Vorteil sein kann, jedoch ist der konstruktive Ausbau relativ kompliziert.

Die DE 42 14 655 A1 offenbart ein zweites Zweimassenschwungrad mit einer antriebsseitigen ersten Schwungmasse und einer gegenüber dieser drehbar gelagerten abtriebsseitigen zweiten Schwungmasse. Die letztgenannte trägt einstükkig im Umfangsbereich eine Gegendruckplatte für Reibbeläge einer Kupplungsscheibe, die über eine Kupplungsnabe auf einer nicht gezeigten Getriebewelle ihre Auflagestelle findet. Über die Reibbeläge wirkt eine Druckplatte mit der besagten Gegendruckplatte zusammen, die durch eine getriebeseitig an einem Kupplungsgehäuse aufgenommene Anpreßfeder beaufschlagbar ist, wobei das Kupplungsgehäuse sowohl die Druckplatte als auch die Gegendruckplatte umschließt und mit einem radial äußeren Ansatz zur Ansteuerung einer Federeinrichtung der Torsionsdämpfereinrichtung dient, wobei sich diese Federeinrichtung anderenends an Ansteuerelementen der antriebsseitigen ersten Schwungmasse abstützt. Durch das Kupplungsgehäuse mit der Anpreßfeder, der Druck- sowie der Gegendruckplatte und der Kupplungsscheibe wird eine Anfahr- und Schaltkupplung gebildet, die über eine in der OS nicht gezeigte Ausrückvorrichtung, die zum Aufheben der Wirkung der Anpreßfeder dient, betätigbar ist.

Bei einem derart aufgebauten Zweimassenschwungrad wirkt der nicht gezeigte Ausrücker auf die radial inneren Enden der Anpreßfeder, so daß er einer radialen Ausdehnung um die Getriebewelle innerhalb der Getriebeglocke bedarf. Bei Fahrzeugen, in denen in der Getriebeglocke kein Raum hierfür vorhanden ist, hat sich die Verwendung einer Reibungskupplung als vorteilhaft erwiesen, wie sie in der DE 29 24 234 A1 dargestellt und beschrieben ist, wobei an einem Ende des Getriebes der Ausrücker angeordnet ist, der über eine, die Getriebewelle durchdringende Stößelstange auf einen Ausrückteller wirkt, der in seinem radial äußeren Bereich auf eine Anpreßfeder wirkt, die sich in ihrem Umfangsbereich an der mit der Kurbelwelle verbundenen Schwungmasse abstützt. Bei einer derartigen Konstruktion befindet sich die Anpreßfeder, abweichend von üblichen Reibungskupplungen, axial zwischen der besagten kurbelwellenseitigen Schwungmasse und einer Druckplatte, die ihrerseits wiederum über die Reibbeläge der Kupplungsscheibe auf eine Gegendruckplatte wirkt. Anpreßfeder, Druckplatte und Gegendruckplatte sind demnach gegenüber üblichen Anfahr- und Schaltkupplungen, in Achsrichtung gesehen, seitenverkehrt eingebaut.

Bei der in der DE 29 24 234 A1 gezeigten Kupplung ist eine mit einer Federeinrichtung ausgebildete Torsionsdämpfereinrichtung zwischen antriebs- und abtriebsseitigem Teil der Kupplungsscheibe angeordnet. Es handelt sich um eine konventionell ausgebildete Reibungskupplung mit nur einer Schwungmasse, die bekanntermaßen insbesondere mit der Ausfilterung niederfrequenter Torsionsschwingungen größeren Betrags überfordert ist.

Eine weitere Reibungskupplung dieses Typs ist in der DE 33 47 913 A1 dargestellt. Auch bei dieser durchgreift eine Stößelstange die Nabe einer mit einer Torsionsdämpfereinrichtung ausgebildeten Kupplungsscheibe einer konventionellen Reibungskupplung, um über einen sich nach radial außen erstreckenden Ausrückteller in Wirkverbindung mit einer Anpreßfeder zu kommen, die zwischen einer an der Kurbelwelle befestigten Schwungmasse und einer Druckplatte angeordnet ist. Diese Druckplatte wirkt über die Reibbeläge der Kupplungsscheibe auf eine Gegendruckplatte, die von einem Kupplungsgehäuse umschlossen ist, welches an der Schwungmasse befestigt ist.

In der DE-GM -Schrift 94 14 314 ist ein Zweimassenschwungrad bekannt, in welchem der Torsionsschwingungsdämpfer zusätzlich zu einer Federeinrichtung auch Zahnräder eines Planetengetriebes aufweist. Von der antriebsseitigen Schwungmasse eingeleitete Momente werden demnach, ebenso wie diesen überlagerte Torsionsschwingungen, unterteilt in einen ersten Anteil, der über die Federeinrichtung auf die abtriebsseitige Schwungmasse übertragen wird und in einen zweiten Anteil, der über Zahnräder des Planetengetriebes übersetzt wird und anschließend auf die abtriebsseitige Schwungmasse gelangt. Die beiden Anteile der Momente überlagern sich, auf die abtriebsseitige Schwungmasse gelangt, derart, daß das eingangsseitig eingeleitete Moment wieder ansteht, wobei die Teilmomente durchaus entgegengesetzte Wirkrichtung haben können. Durch diese Art eines Torsionsschwingungsdämpfers sind Torsionsschwingungen besonders effektiv dämpfbar.

Der Erfindung liegt die Aufgabe zugrunde, ein Zweimassenschwungrad, bei welchem innerhalb der Getriebeglocke im Bereich radial außerhalb der Getriebewelle kein Raum für die Unterbringung einer Ausrückvorrichtung benötigt wird, so weiterzubilden, daß dieses zugunsten konstruktiver Vereinfachung ein Minimum an Bauteilen zur Realisierung benötigt.

Diese Aufgabe wird erfindungsgemäß durch die im Kennzeichen des Anspruchs 1 angegebenen Merkmale gelöst.

Bei einem Zweimassenschwungrad erweist sich die Maßnahme, den Ausrücker mit einer Ausrückvorrichtung auszubilden, welche die Kupplungsscheibe radial innerhalb deren Auflagestelle durchgreift, als besonders problematisch, da, hierdurch bedingt, die Anpreßfeder vorzugsweise von ihrer bei Zweimassenschwungrädern üblichen, d h., an der Getriebeseite der Kupplungsscheibe angeordneten Position auf die Gegenseite der Kupplungsscheibe gebracht wird, wo sie direkt oder, beispielsweise über einen mit ihr in Wirkverbindung stehenden Ausrückteller, bis zu der Ausrückvorrichtung nach radial innen geführt und demnach durch die letztgenannte von der Druckplatte, die ebenso wie die jenseits der Reibbeläge der Kupplungsscheibe angeordnete Gegendruckplatte im Vergleich zu einem "normalen" Zweimassenschwungrad - die Antriebs- und Abtriebsseite betreffend - seitenverkehrt angeordnet sind, abgehoben werden kann. Die zuvor bereits erwähnte Problematik ergibt sich beispielsweise bei der Suche nach einer geeigneten Abstützstelle für die Anpreßfeder mit ihrer von der Druckplatte abgewandten Seite, da nämlich auf keinen Fall zwischen der Anpreßfeder und der Abstützung eine auf die Haltbarkeit der Axialfeder einen negativen Einfluß ausübende Relativbewegung vorliegen darf. Dieses Problem ist anspruchsgemäß dadurch lösbar, daß die von der Druckplatte abgewandte Seite der Anpreßfeder an einer speziell hierfür vorgesehenen Abstützung der zweiten Schwungmasse zur Anlage gebracht wird, mit welcher sowohl die Druckplatte als auch die Gegendruckplatte drehfest verbunden sind, so daß diejenigen Bauteile (zweite Schwungmasse, Druckplatten), welche die Anpreßfeder beidseits abstützen, in Umfangsrichtung zu einer Synchronbewegung gezwungen sind. Die bei Zweimassenschwungrädern zur Ausfilterung niederfrequenter Schwingungen erforderliche Relativbewegung zwischen der ersten Schwungmasse und der zweiten Schwungmasse in Umfangsrichtung ist demnach trotz der erfindungsgemäßen Anordnung der Anpreßfeder zwischen der ersten Schwungmasse und, über die Druckplatte, der zweiten Schwungmasse nicht behindert

Als weitere Besonderheit der zweiten Schwungmasse außer der besagten Abstützung für die Anpreßfeder ist die Maßnahme zu nennen, zumindest eine der Platten (Druckplatte, Gegendruckplatte) unter Verzicht auf ein bei "normalen" Zweimassenschwungrädern zur Befestigung der Platten vorgesehenen Kupplungsgehäuses mit dem Zweimassenschwungrad selbst fest zu verbinden, so daß das erfindungsgemäße Zweimassenschwungrad eine geringere Bauteilzahl aufweist als üblich und folglich leichter und kostengünstiger ist. Durch den Wegfall des Kupplungsgehäuses ist insbesondere in Achsrichtung eine kompaktere Ausbildung des Zweimassenschwungrades erzielbar, wodurch die in ihrer Größe bereits durch die erfindungsgemäße Ausbildung des Ausrückers verkleinerbare Getriebeglocke - insbesondere in Achsrichtung - noch kompakter ausgebildet werden kann.

Wie bereits beschrieben, wird durch die zweite Schwungmasse in Verbindung mit der Druck- und der Gegendruckplatte sowie der Anpreßfeder eine modulartige Einheit gebildet, bei welcher die besagten Bauelemente synchron zueinander in Umfangsrichtung auslenkbar sind. Gegenüber dieser Einheit muß die erste Schwungmasse in Umfangsrichtung relativ auslenkbar sein, so daß zwischen den beiden Schwungmassen eine Lagerung zweckmäßig ist. Aufgrund der Anordnung der Anpreßfeder axial zwischen der Druckplatte und der ersten Schwungmasse ist der bei Zweimassenschwungrädern üblicherweise zur Einbringung einer Lagerung vorgesehenen Raum nicht nutzbar, weshalb die am radial inneren Ende der abtriebsseitigen Wand der ersten Schwungmasse vorgesehene Aufnahme zur Anordnung der Lagerung vorgesehen ist, wobei die Lagerung auf einem axial verlaufenden Abschnitt dieser Aufnahme angeordnet ist.

In Anspruch 4 ist eine vorteilhafte Ausführungsform dieser Aufnahme an der abtriebsseitigen Wand in Form einer Umbiegung angegeben. Die Aufnahme bildet folglich die Übergangsstelle zwischen den beiden Schwungmassen, wobei die auf der ersten Schwungmasse angeordnete Lagerung nach Anspruch 5 die Gegendruckplatte aufnehmen kann, die ihrerseits wiederum die zweite Schwungmasse trägt, gemäß Anspruch 6 zumindest einen Planetenträger eines als Zwischenmasse wirksamen Planetengetriebes aufnimmt, der entsprechend Anspruch 7 ebenfalls die zweite Schwungmasse sowie auch die Gegendruckplatte trägt, ausgebildet sein kann. Bedingt durch die Übergangsstelle an der Lagerung zwischen erster und zweiter Schwungmasse bietet sich der Umgebungsbereich der Lagerung auch als Ausbildungsort für eine Fettkammer der Torsionsdämpfereinrichtung an, wobei nach Anspruch 8 die Fettkammer durch mit Achsabstand zueinander verlaufende Planetenträger begrenzt ist, während gemäß Anspruch 9 einerseits die zweite Schwungmasse und andererseits ein mit dieser drehfestes, axial beabstandetes Abdeckblech die Seitenwände der Fettkammer bilden. Das letztgenannte Abdeckblech kann gemäß Anspruch 10 auch als axiale Anlage für die Gegendruckplatte verwendet werden.

Insbesondere während des Aus- oder Einrückens der Kupplung kommt es üblicherweise zu Schlupf zwischen den Platten (Druck- und Gegendruckplatte) und den Reibbelägen der Kupplungsscheibe, so daß sich von den besagten Reibbelägen Abrieb löst. Zur Aufnahme dieses Abriebes ist entsprechend Anspruch 11 wenigstens eine Ausnehmung in zumindest einer der Schwungmassen vorgesehen, wobei diese Ausnehmung kammerförmig ausgebildet ist und als Speicher zur Aufnahme des Abriebs dient. Ein Leitblech gemäß Anspruch 12 erleichtert hierbei das Eindringen des Abtriebs in die zugeordnete Ausnehmung, so daß dem Abrieb das Abwandern in andere Bereiche des Zweimassenschwungrades, in denen er Schäden anrichten könnte, weitgehend verhindert wird.

Im folgenden werden Ausführungsbeispiele der Erfindung anhand einer Zeichnung näher erläutert. In der Zeichnung zeigt:
- Fig. 1: eine Hälfte eines Zweimassenschwungrades oberhalb der Mittellinie in Schnittdarstellung mit Torsionsdämpfereinrichtung in der ersten Schwungmasse und Anordnung einer Lagerung zwischen der letzteren und einer zweiten Schwungmasse radial außerhalb einer Anfahr- und Schaltkupplung, allerdings noch ohne Darstellung des Erfindungsgegenstandes;
- Fig. 2: wie Fig. 1, aber mit Anordnung der Lagerung radial innerhalb der Anfahr- und Schaltkupplung als Teil des Erfindungsgegenstandes;
- Fig. 3: wie Fig. 2, aber mit Ausbildung der Torsionsdämpfereinrichtung in der zweiten Schwungmasse;
- Fig. 4: wie Fig. 3, aber mit Ausbildung der Torsionsdämpfereinrichtung mit einem Planetengetriebe;
- Fig. 5: eine vergrößerte Herauszeichnung einer mit der zweiten Schwungmasse verbundenen Gegendruckplatte, die eine Ausnehmung zur Aufnahme von Abrieb aufweist.

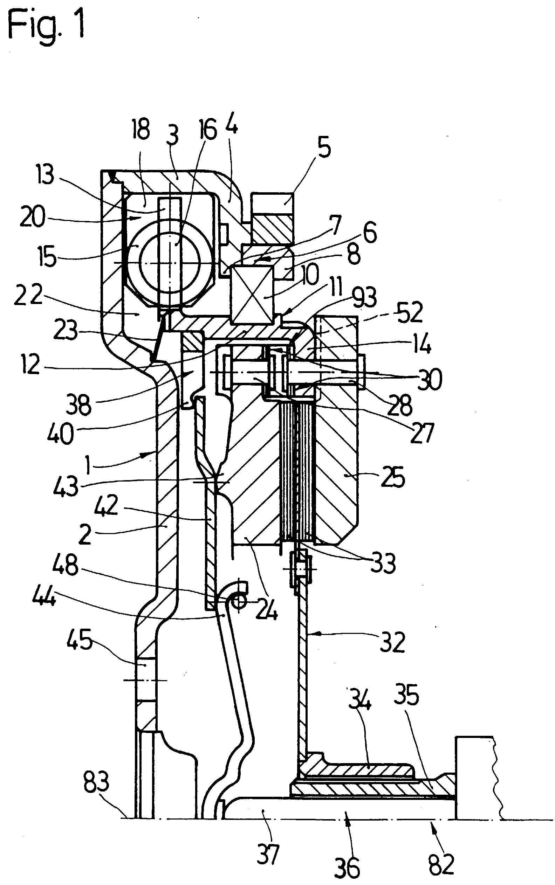

Das Zweimassenschwungrad gemäß Fig. 1 weist eine erste Schwungmasse 1 auf, die im radial inneren Bereich einer sich nach radial außen erstreckenden antriebsseitigen Wand 2 Durchgangsöffnungen 45 aufweist, welche für nicht dargestellte Schrauben zur Befestigung des Zweimassenschwungrades an einer ebenfalls nicht gezeigten Kurbelwelle eines Antriebs vorgesehen sind. Im Umfangsbereich der Wand 2 ist ein vom Antrieb weggerichteter axialer Ansatz 3 befestigt, an den sich eine nach radial innen laufende abtriebsseitige Wand 4 anschließt. Diese weist im radial inneren Bereich eine Schulter 7 auf, die als antriebsseitige Axialsicherung für eine Lagerung 10, beispielsweise ein axial abgedichtetes Wälzlager, dient. An der Wand 4 der ersten Schwungmasse 1 ist abtriebsseitig ein Ring 8 L-förmigen Querschnittes befestigt, der mit einem sich in radialer Richtung nach innen erstreckenden Ende ebenfalls als Axialsicherung für die Lagerung 10 dient und, auf einem axialen Abschnitt in seinem radial äußeren Bereich einen Anlasserzahnkranz 5 trägt.

Die Lagerung 10 ist radial innen auf einem axialen Abschnitt 12 einer abtriebsseitigen zweiten Schwungmasse 11 gelagert, und zwar axial in beiden Richtungen gesichert. Die zweite Schwungmasse 11 weist gemäß Fig. 1 auf der linken Seite angrenzend an den axialen Abschnitt 12 einen nach radial außen verlaufenden Abschnitt 13 auf, der Ausnehmungen 16 zur Aufnahme einer Federeinrichtung 15 sowie zwischen jeweils zwei Federn derselben angeordnete Gleitschuhe 18 aufweist. Eine derartige Federeinrichtung 15 mit Gleitschuhen 18 ist beispielsweise aus der DE 41 28 868 A1 bekannt, weshalb an dieser Stelle nicht ausführlicher darauf eingegangen wird. Funktionsgemäß ist anzumerken, daß an den der Federeinrichtung 15 zugewandten Seiten der ersten Schwungmasse 1 nicht gezeigte Ansteuerelemente vorgesehen sind, welche die Federeinrichtung 15 bei Einleitung eines Momentes an deren den Ansteuerelementen zugeordnetem Ende unter Verformung in Richtung zum Anschlag, der durch das entsprechende Ende der Ausnehmung 16 der zweiten Schwungmasse 11 gebildet wird, verlagern. Die zweite Schwungmasse 11 wird dadurch relativ zu der ersten Schwungmasse 1 ausgelenkt. Da sich sowohl der radial äußere Abschnitt 13 der zweiten Schwungmasse 11 als auch die Federn der Federeinrichtung 15 und die Gleitschuhe 18 in einer durch die Wände 2 und 4, den Ansatz 3, die Lagerung 10 und den axialen Abschnitt 12 der zweiten Schwungmasse 11 umschlossenen Fettkammer 22 befinden, die zumindest teilweise mit viskosem Medium befüllt ist, hat eine Verformung der Federeinrichtung 15 unter Einleitung eines Momentes stets eine durch das viskose Medium bedingte geschwindigkeitsabhängige Dämpfung zur Folge. Die Fettkammer 22 ist demnach in Verbindung mit den darin aufgenommenen Bauteilen 11,15,18 als Torsionsdämpfereinrichtung 20 wirksam. Des weiteren kann das Zweimassenschwungrad mit zumindest einer in überlicher Weise ausgebildeten und daher nicht gezeigten Reibvorrichtung ausgebildet sein. Aufgrund der Kombination der Federeinrichtung 15 mit der Dämpfungseinrichtung in der Fettkammer 22 und der zumindest einen Reibvorrichtung sind Schwingungen, die mit den antriebsseitig eingeleiteten Momenten übertragen werden, weitgehend ausfilterbar, so daß abtriebsseitig ein Moment abgegeben werden kann, das gegenüber dem antriebsseitigen Moment erheblich geglättet ist.

Die zweite Schwungmasse 11 weist im Bereich ihres Übergangs vom axialen Abschnitt 12 zum radial nach außen laufenden Abschnitt 13 eine Abdichtung 23 in Form eines Federelementes auf, das sich anderenends in einer Vertiefung der Wand 2 abstützt.

Gemäß Fig. 1 an der rechten Seite der zweiten Schwungmasse 11 ist ein radial innerer Abschnitt 14 vorgesehen, welcher Durchgangsöffnungen zur Aufnahme von Nieten 28 aufweist, die an ihrem in Figur 1 linken Ende über elastische Mittel 30, die einerends an den Nieten 28 und anderenends an Nieten 27 einer Druckplatte 24 gehalten sind, mit der letztgenannten verbunden sind. Bei den besagten elastischen Mitteln 30 handelt es sich beispielsweise um Tangentialblattfedern. Die in Fig. 1 entgegengesetzten Enden der Niete 28 dienen zur Fixierung einer Gegendruckplatte 25 an der zugeordneten Seite des radial inneren Abschnitts 14 der zweiten Schwungmasse 11. Die Druckplatte 24 ist demnach drehfest, aber axial verlagerbar, die Gegendruckplatte 25 dagegen drehfest und axial fest an der zweiten Schwungmasse 11 aufgenommen. Zwischen den beiden Druckplatten 24,25, ist eine Kupplungsscheibe 32 mit Reibbelägen 33 angeordnet. Die Kupplungsscheibe 32 weist radial innen eine Nabe 34 auf, die drehfest, beispielsweise über einer Verzahnung, mit einer Getriebewelle 35 eines nicht gezeigten Getriebes verbunden ist.

Die Druckplatte 24 weist an ihrer der Wand 2 der ersten Schwungmasse 1 zugewandten Seite eine Anformung 43 auf, welche durch die elastischen Mittel 30 an einer Anpreßfeder 42, die beispielsweise durch eine Membranfeder oder eine Tellerfeder gebildet sein kann, in Anlage gehalten wird. Die Anpreßfeder 42 ihrerseits stützt sich mit ihrer von der Anformung 43 abgewandten Seite im Umfangsbereich an Vorsprüngen 40 ab, die an der radialen Innenseite des axialen Abschnittes 12 der zweiten Schwungmasse 11 fest vorgesehen sind und sich nach radial innen erstrecken. Durch die Vorsprünge 40 wird eine Abstützung 38 für die Anpreßfeder 42 gebildet. Die letztgenannte kommt mit ihrem radial inneren Ende an einem Ausrückteller 44 zur Anlage, der über einen in bekannter Weise ausgebildeten, durch nicht gezeigte Zungen der Anpreßfeder 42 in vorbestimmbarem Abstand zu dieser gehaltenen Rückhalter 48, beispielsweis in Form eines Drahtringes, einerends und durch geradlinig nach radial innen verlaufende Zungen der Anpreßfeder 42 anderenends axial gesichert gehalten ist. Der Ausrückteller 44 erstreckt sich bis an eine Mittelachse 83, die als Drehachse für beide Schwungmassen 1,11 wirksam ist, nach radial innen und ist durch eine Stößelstange 37, die in der Getriebewelle 35 axial verschiebbar aufgenommen ist, in Achsrichtung beaufschlagbar. Die Stößelstange 37 ist Teil einer Ausrückvorrichtung 36 eines Ausrückers 82, dessen Antrieb an beliebiger Stelle, also nicht unbedingt innerhalb einer in üblicher Weise ausgebildeten, jedoch nicht gezeigten Getriebeglocke angeordnet sein muß. Über diesen Antrieb ist zum Ausrücken der Reibungskupplung eine Axialkraft auf die Stößelstange 37 leitbar, durch welche diese gemäß Fig. 1 um einen vorbestimmbaren Betrag nach links verschoben wird, wobei sie, den Ausrückteller 44 mitnehmend, denselben in Achsrichtung parallel zu sich selbst verschiebt. Hierdurch wird die Anpreßfeder 42 zu einer Schwenkbewegung um deren Auflage an der Abstützung 38 in Richtung zur Wand 2 veranlaßt, wodurch sich die Anpreßfeder 42 von der Kupplungsscheibe 32 sowie von der Gegendruckplatte 25 entfernt und somit der Druckplatte 24 unter der Wirkung der elastischen Mittel 30 einen Abhub vom zugeordneten Reibbelag 33 der Kupplungsscheibe 32 gestattet. Die Übertragung eines antriebsseitig eingeleiteten Momentes über die Druckplatten 24 und 25 auf die Reibbeläge 33 und damit über die Kupplungsscheibe 32 auf die Getriebewelle 35 ist dadurch aufgehoben.

Zum Einrücken wird die Stößelstange 37 mittels des nicht gezeigten Antriebs wieder in ihre Ausgangsposition zurückgezogen, so daß die Anpreßfeder 42 infolge der Entlastung eine Schwenkbewegung um ihre Auflage an der Abstützung 38 in Richtung zur Kupplungsscheibe 32 ausführt und hierbei einerseits den Ausrückteller 44 am freien Ende der Stößelstange 37 in Anlage haltend, der letztgenannten nachschiebt, und andererseits über die Anformung 43 der Druckplatte 24 eine gemäß Fig. 1 nach rechts gerichtete Axialkraft auf die letztgenannte ausübt, durch welche die elastischen Mittel 30 verformt werden, bis die Druckplatte 24, an dem zugeordneten Reibbelag 33 in Anlage kommend, die Reibbeläge 33 der Kupplungsscheibe 32 zwischen sich und der Gegendruckplatte 25 festklemmt, und demnach eine Übertragung eines antriebsseitig eingeleiteten Momentes über die Kupplungsscheibe 32 auf die Getriebewelle 35 sicherstellt.

Der nicht gezeigte Antrieb für die Ausrückvorrichtung 36 und somit für die Stößelstange 37 kann in beliebiger Weise ausgebildet sein. So kann er beispielsweise durch einen Linearantrieb gebildet werden, wie durch einen Druckmittelzylinder, dessen Kolbenstange ein- und ausfahrbar ist, wobei die Axialbewegung der Kolbenstange unmittelbar auf die Stößelstange 37 übertragen wird. Ebenso ist ein Antrieb denkbar, der eine rotierende Bewegung erzeugt, die über ein Lenkergetriebe auf die Stößelstange 37 übertragen wird und auf diese Weise deren Axialbewegung erzeugt. Ein bekanntes Beispiel für die Ausbildung eines derartigen, eine Drehbewegung in eine Linearbewegung umsetzenden Getriebes sei durch ein Schubkurbelgetriebe genannt.

Wie bereits erläutert, ist die Druckplatte 24 ebenso wie die Gegendruckplatte 25 drehfest mit der zweiten Schwungmasse 11 verbunden. Dadurch ist die Anpreßfeder 42, die über die Abstützung 38 der zweiten Schwungmasse 11 axial zwischen der letztgenannten und der Druckplatte 24 angeordnet ist, frei von Relativbewegungen in Umfangsrichtung abstützbar. Durch alle diese synchron zueinander um die Mittelache 83 drehbaren Bauteile 11,24,25 und 42 wird eine modulartige Einheit 93 gebildet.

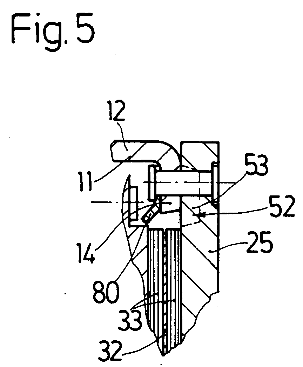

Beim Ein- oder Ausrücken der Reibungskupplung ist ein zeitlich begrenzter Schlupf der Reibbeläge 33 gegenüber der Druckplatte 24 einerseits und der Gegendruckplatte 25 andererseits unvermeidbar. Während dieser Schlupfphase entsteht aufgrund sich lösender Partikel von den Reibbelägen 33 Abrieb, der, um nicht als Schmirgelmaterial im Zweimassenschwungrad verschleißfördernd in Erscheinung zu treten, abgeführt werden soll. Hierzu ist gemäß Fig. 1 die Gegendruckplatte 25 an ihrer dem radial inneren Abschnitt 14 der zweiten Schwungmasse 11 zugewandten Seite beginnend am Umfangsbereich der Reibbeläge 33 und sich nach radial außen erstreckend mit zumindest einer Ausnehmung 52 versehen. Diese kann derart ausgebildet sein, daß sich von den Reibbelägen 33 lösender Abrieb unter der Wirkung der Fliehkraft bei Drehung des Zweimassenschwungrades um dessen Mittelachse 83 in die Ausnehmung 52 eindringt und nach radial außen abwandert. Ebenso ist denkbar, daß in der Gegendruckplatte 25 gemäß Fig. 5 eine den Abrieb aufnehmende Kammer 53 ausgebildet ist, die derart dimmensioniert ist, daß der sich maximal von den Reibbelägen 33 lösende Abrieb aufgenommen werden kann. Dieser Kammer, die im radial äußeren Bereich durch den radial inneren Abschnitt 14 der zweiten Schwungmasse 11 verschlossen ist, ist ein Leitblech 80 zugeordnet, welches einen Austritt des Abriebs aus dem hierfür vorgesehenen Raum verhindert und eine Ableitung in die Kammer 53 begünstigt. Vorzugsweise ist, wie in Fig. 5 gezeigt, das radial innere Ende des Abschnittes 14 der zweiten Schwungmasse 11 angeschrägt, und zwar derart, daß der radial innere Abschnitt 14 mit zunehmender Annäherung an die Gegendruckplatte 25 nach radial außen aufgeweitet ist.

Hierdurch wird der Effekt verstärkt, daß auf das Leitblech 80, das ebenfalls in dieser Richtung ausgerichtet ist, oder auf das radial innere Ende des Abschnittes 14 auftreffender Abtrieb infolge der Fliehkraft nur in Richtung zur Kammer 53 wandern kann, die, wie in Fig. 5 zu sehen, an ihrem radial inneren Ende ebenfalls eine derartig geneigte Wand aufweist. Der Abrieb wird sodann nach Eintritt in die Kammer 53 an dieser Wand unter Fliehkrafteinfluß so tief wie möglich in die Kammer 53 hineintransportiert und wandert anschließend nach radial außen ab. Dort ist die radial äußere Wand der Kammer 53 in entgegengesetzter Richtung geneigt, so daß sich der Abrieb zuerst an dem am weitesten von seiner Entstehungsstelle entfernten Bereich der Kammer 53 ablagert. Die Kammer 53 füllt sich demnach von radial außen nach radial innen, so daß der Zuführungsweg des Abriebs stets unbehindert bleibt.

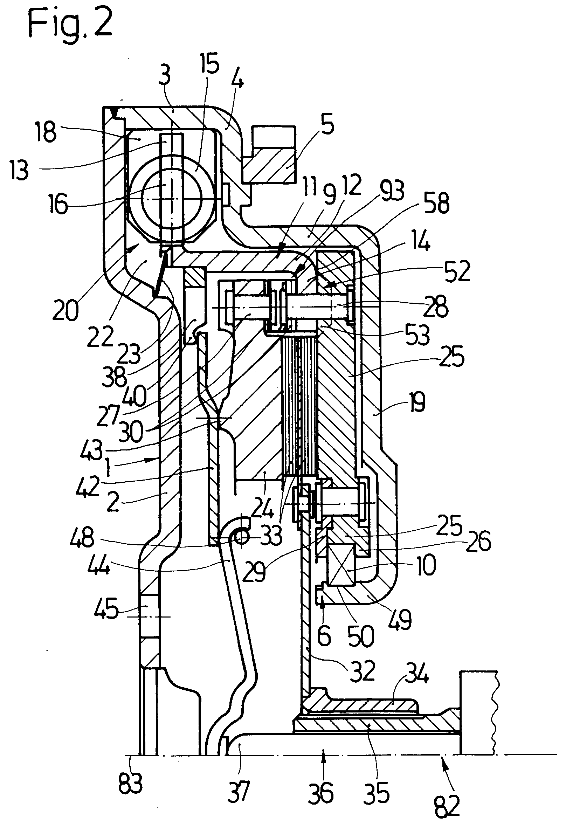

Die Ausführung des Zweimassenschwungrades gemäß Fig. 2 unterscheidet sich von derjenigen nach Fig. 1 im wesentlichen dadurch, daß sich an die radial nach innen laufende Wand 4 der ersten Schwungmasse 1 ein weiterer axialer Ansatz 9 und an diesen eine weitere abtriebsseitige, nach radial innen laufende Wand 19 anschließt. Diese Wand 19 ist im radial inneren Bereich, der radial innerhalb der Reibscheiben 33 der Kupplungsscheibe 32 endet, in Richtung zur letztgenannten mit einer Umbiegung 49 versehen, wodurch ein axialer Abschnitt 50 entsteht. Durch die Umbiegung 49 in Verbindung mit dem axialen Abschnitt 50 wird die Aufnahme 6 für die Lagerung 10 gebildet. Die Lagerung 10, die in der Aufnahme 6 gegen Axialbewegungen gesichert ist, trägt radial außen die Gegendruckplatte 25, an der einerends eine Schulter 26 und anderenends eine mit der Gegendruckplatte 25 drehfeste Scheibe 29 zur Axialsicherung der Gegendruckplatte 25 vorgesehen ist. Da das Zweimassenschwungrad gemäß Fig. 2 ansonsten dem in Fig. 1 bereits ausführlich beschriebenen entspricht, wird nicht weiter auf diese Ausführung eingegangen.

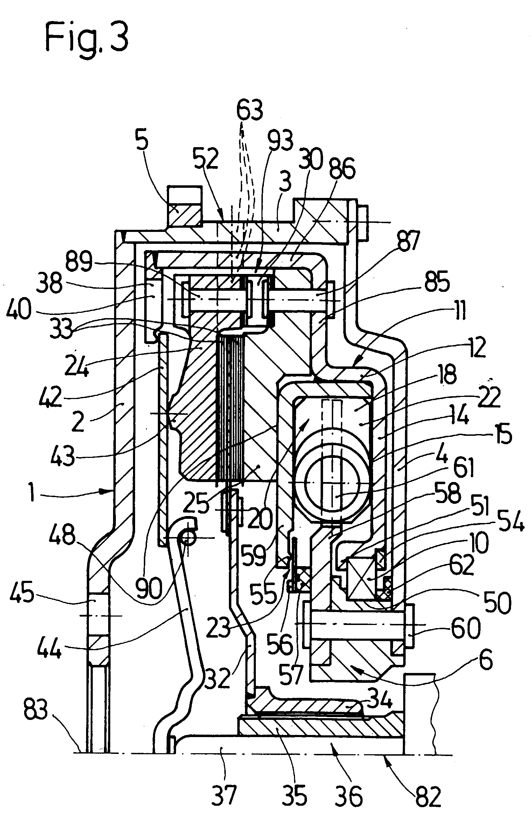

In Fig. 3 ist ein weiteres Zweimassenschwungrad dargestellt, bei dem die erste Schwungmasse 1 außer der radial nach außen laufenden Wand 2 und dem axialen Ansatz 3 die radial nach innen laufende Wand 4 aufweist, an deren radial innerem Ende über Niete 60 die Aufnahme 6 für die Lagerung 10 vorgesehen ist. Die Aufnahme 6 weist im Bereich ihres axialen Abschnittes 50 eine Axialsicherung für die Lagerung 10 auf, indem die letztgenannte an ihrer in Fig. 3 linken Seite an einer Schulter der Aufnahme 6 und an ihrer rechten Seite an einem Distanzring 62 L-förmigen Querschnittes gehalten ist. Radial außen trägt die Lagerung 10 die zweite Schwungmasse 11, indem diese an ihrem radial inneren Abschnitt 12 an dessen radial inneren Ende eine Schulter 51 aufweist, durch welche eine Seite der Lagerung 10 abstützbar ist, während die andere Seite derselben durch eine am radial inneren Abschnitt 14 der zweiten Schwungmasse 11 angeschweißte Scheibe 54 die Schwungmasse 11 gegen Axialbewegung sichert. An der zweiten Schwungmasse 11 ist an deren axialem Abschnitt 12 ein Deckblech 59 über einen ebenfalls axial verlaufenden Abschnitt desselben befestigt, das an seiner der Kupplungsscheibe 32 zugewandten Seite nach radial innen geführt ist. Am radial inneren Ende dieses Deckbleches 59 ist eine Abdichtung 23 vorgesehen, die mit ihrer vom Deckblech 59 abgewandten Seite an einem Momentenüberträger 58, der über die Niete 60 an der Aufnahme 6 befestigt ist, zur Anlage kommt. Die Abdichtung 23 ist durch eine an der ihr zugewandten Seite des Deckblechs 59 ausgebildete Nase 55, eine Axialfeder 56 und ein Dichtelement 57 gebildet. Die Axialfeder 56 stützt sich hierbei radial innen am Dichtelement 57 und radial außen an der Nase 55 des Deckblechs 59 ab. Hierdurch wird an der Verbindungsstelle Nase 55/Axialfeder 56 eine erste Abdichtung und an der Verbindungsstelle Axialfeder 56/Dichtelement 57 eine zweite Dichtstelle gebildet. Die Abdichtung 23 verschließt eine Fettkammer 22, die vom Deckblech 59, dem radial inneren Abschnitt 14 der zweiten Schwungmasse 11, der Lagerung 10, der Aufnahme 6 und dem Momentenüberträger 58, der in die Fettkammer 22 hineinragt, gebildet wird. Der Momentenüberträger 58 wirkt mit der in der Fettkammer 22 angeordneten Federeinrichtung 15 sowie den Gleitschuhen 18 in der bereits zu Fig. 1 anhand des dort als Momententräger wirksamen radial äußeren Abschnittes 13 der zweiten Schwungmasse 11 beschriebenen Weise zusammen, wobei auch der Momententräger 58 mit Ausnehmungen 61 für die Federeinrichtung 15 versehen ist. Durch die Fettkammer 22 wird in Verbindung mit der Federeinrichtung 15, dem Momentenüberträger 58 sowie einer nicht gezeigten Reibvorrichtung eine Torsionsdämpfereinrichtung 20 gebildet.

An den axialen Abschnitt 12 der zweiten Schwungmasse 11 schließt sich ein radial nach außen laufender Abschnitt 85 an, der seinerseits nach Umbiegung in einen in Richtung zur Wand 2 verlaufenden weiteren axialen Abschnitt 86 übergeht. An dem radialen Abschnitt 85 der zweiten Schwungmasse 11 ist über Niete 87 die Gegendruckplatte 25 sowie ein Ende elastischer Mittel 30 befestigt. Das andere Ende der elastischen Mittel 30 ist über weitere Niete 89 mit der Druckplatte 24 verbunden, die zwischen sich und der Gegendruckplatte 25 in bereits beschriebenen Weise die Reibbeläge 33 der Kupplungsscheibe 32 aufnimmt. Bei den Druckplatten 24 und 25 liegt insofern ein Unterschied gegenüber den bislang beschriebenen Ausführungen des erfindungsgemäßen Zweimassenschwungrades vor, daß nicht mehr beide Druckplatten direkt an der zweiten Schwungmasse 11 befestigt sind, sondern die Gegendruckplatte 25 direkt, die Druckplatte 24 dagegen über die Gegendruckplatte und damit indirekt an der zweiten Schwungmasse 11 angreift. Die der Gegendruckplatte 25 zugewandte Seite des Deckbleches 59 ist hierbei als axiale Abstützung 90 für die Gegendruckplatte 25 wirksam.

Die Druckplatte 24 ragt radial außerhalb der Reibbeläge 33 in Achsrichtung über diese hinweg. Um dennoch einen Austritt von an den Reibbelägen 33 entstandenem Abrieb zu ermöglichen, sind sowohl in diesem axialen Ansatz der Druckplatte 24 als auch im axialen Abschnitt 86 der zweiten Schwungmasse 11 sowie im axialen Abschnitt 3 der ersten Schwungmasse 1 Durchgangsöffnungen 63 vorgesehen, die als Ausnehmung 52 für den Abrieb wirksam sind, der infolge der Fliehkraft bei Drehung des Zweimassenschwungrades um seine Mittelachse 83 nach radial außen geschleudert wird und auf diese Weise das Zweimassenschwungrad verlassen kann.

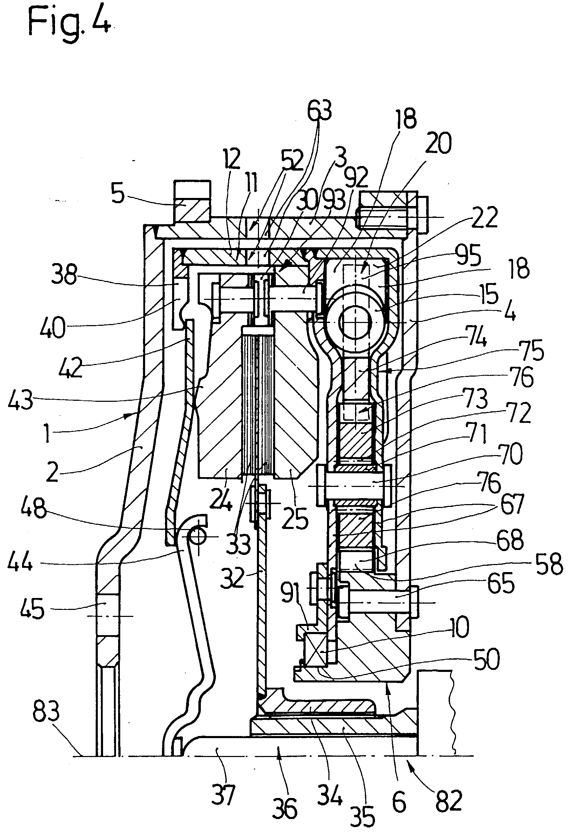

Das Zweimassenschwungrad nach Fig. 4 unterscheidet sich von demjenigen entsprechend Fig. 3 im wesentlichen dadurch, daß im radial äußeren Bereich der Lagerung 10, die auf der Aufnahme 6 der ersten Schwungmasse 1 axial fest gelagert ist, ein Planetenträger 67 angeordnet ist, der sich einerends direkt an der Lagerung 10 abstützt und anderenends über ein mit ihm drehfestes Blech 91 an der Lagerung 10 angreift. Dieser Planetenträger 67 ist im radial äußeren Bereich mit einem weiteren Planetenträger 67 fest verbunden, wobei die beiden Planetenträger 67 mit axialem Abstand zueinander angeordnet sind und zwischen sich ein Sonnenrad 68, das drehfest an der Aufnahme 6 aufgenommen ist, eine Mehrzahl von Planetenrädern 73, die über Niete 70, diese umgebende Hülsen 71 und Nadellager 72 gehalten sind sowie ein Hohlrad 74 als Zahnräder umschließen. Das Hohlrad 74 weist im radial äußeren Bereich Ausnehmungen 95 für die Federeinrichtung 15 auf, die zwischen jeweils zwei Federn Gleitschuhe 18 aufweist und sich anderenends an Ansteuerelementen abstützt, die an den Innenseiten der Planetenträger 67 befestigt sind.

Auf die Lagerung der Planetenräder 73 zurückkommend, sind diese über die Nadellager 72 reibungsfrei jeweils auf einer Hülse 71 angeordnet, durch welche die beiden Planetenträger 67 in vorbestimmbarem Abstand zu einander gehalten werden. Durch die Niete 70 werden die Planetenträger 67 von axial außen gegen die jeweilige Hülse 71 gezogen.

Der in Fig. 4 linke Planetenträger 67 ist über Niete 92 mit der Gegendruckplatte 25 fest verbunden, die wiederum in bereits zu Fig. 3 beschriebener Weise über elastische Mittel 30 mit der Druckplatte 24 verbunden ist.

Durch die Planetenträger 67, die Lagerung 10 und die Aufnahme 6 wird eine die Zahnräder 68,73 und 74 umhüllende Fettkammer 22 gebildet. Selbstverständlich ist hierbei, wie bereits bei den zuvor beschriebenen Zweimassenschwungrädern gemäß Fig. 1 bis 3 die Lagerung 10 dichtend ausgebildet, so daß an deren der Fettkammer 22 zugewandten Seite ankommendes Viskosemedium nicht ins Freie gelangen kann.

Das Zweimassenschwungrad gemäß Fig. 4 funktioniert derart, daß ein von der ersten Schwungmasse 1 eingeleitetes Moment auf das mit der Aufnahme 6 drehfeste Sonnenrad 68 geleitet wird und über die Planetenräder 73 einerseits durch die Nieten 70 als erstes Teilmoment auf die Planetenträger 67 und damit auf die zweite Schwungmasse 11, andererseits dagegen als zweites Teilmoment auf das Hohlrad 74 übertragen wird, das über die Federeinrichtung 15 mit den Planententrägern 67 und folglich mit der zweiten Schwungmasse 11 verbunden ist. Das erstgenannte Teilmoment nimmt hierbei die Drehrichtung des eingeleiteten Momentes ein, während das zweite Teilmoment für eine Bewegung des Hohlrades 74 in entgegengesetzter Richtung sorgt. Diese beiden Teilmomente können, für sich gesehen, jeweils größer als das eingeleitete Moment sein, jedoch ist das abtriebsseitige Moment, das nach Überlagerung der beiden Teilmomente gebildet wird, betragsmäßig wieder dem eingeleiteten Moment entsprechend. Die Vorteile eines derartigen, zwischen die erste Schwungmasse 1 und die zweite Schwungmasse 11 geschalteten, als Zwischenmasse 76 wirksamen Planetengetriebes 5 ist, für sich gesehen, durch die deutsche Gm-Schrift 94 14 314 beschrieben, so daß an dieser Stelle nicht näher hierauf eingegangen werden soll. Wesentlich ist, wie bei den bereits zuvor beschriebenen Ausführungen des Zweimassenschwungrades, daß unterschiedliche Varianten desselben jeweils mit der erfindungsgemäßen Anordnung von Druckplatte 24, Kupplungsscheibe 32, Gegendruckplatte 25 und Anpreßfeder 42 relativ zu den Schwungmassen 1 und 11 ausgebildet sind, um über eine die Getriebewelle 35 durchstoßende Ausrückvorrichtung 36, die im unmittelbaren radialen Nachbarbereich zur Mittelachse 83 wirksam ist, ausrücken zu können, ggf. über einen Ausrückteller 44.

## Patentansprüche

1. Zweimassenschwungrad mit einer antriebsseitigen ersten Schwungmasse (1) und einer gegenüber dieser drehbar gelagerten abtriebsseitigen zweiten Schwungmasse (11), mit einer Anfahr- und Schaltkupplung, die mit einer Kupplungsscheibe (32) versehen ist, die ihre Auflagestelle vorzugsweise auf einer abtriebsseitigen Getriebewelle (35) aufweist und in eingerücktem Zustand unter der Wirkung einer eine Druckplatte (24) in der einer Gegendruckplatte (25) zugewandten Richtung belastenden Anpreßfeder (42) steht, sowie mit einer Ausrückvorrichtung (36) zum Aufheben der Wirkung der Anpreßfeder (42), und mit einer Torsionsdämpfereinrichtung (20) mit mindestens einer zwischen den Schwungmassen (1,11) angeordneten Federeinrichtung (15), wobei die zweite Schwungmasse (11) zur drehfesten Aufnahme zumindest einer der in Umfangsrichtung synchron zueinander bewegbaren Platten, wie Druckplatte (24) oder Gegendruckplatte (25) zur Bildung einer modulartigen Einheit (93) vorgesehen ist und die Druckplatte (24) die antriebsseitige Platte, die Gegendruckplatte (25) dagegen die abtriebsseitige Platte bildet, die Anpreßfeder (42) antriebsseitig in Achsrichtung zwischen der ersten Schwungmasse (1) und der Druckplatte (24) angeordnet und an einer Abstützung (38) der zweiten Schwungmasse (11) angelagert ist, zur Beaufschlagung der Druckplatte (24) mit einer Axialkraft in einer der Getriebewelle (35) zugewandten Richtung dient, und der Ausrücker (82) eine radial innerhalb der Auflagestelle der Kupplungscheibe (32) in Richtung zur ersten Schwungmasse (1) durchgreifende und mit der Anpreßfeder (42) in Wirkverbindung bringbare Ausrückvorrichtung (36) aufweist,
dadurch gekennzeichnet,
daß die erste Schwungmasse (1) im Umfangsbereich an deren getriebewellenseitigem Ende eine im wesentlichen nach radial innen laufende abtriebsseitige Wand (19) aufweist, die in einen Bereich radial innerhalb der zweiten Schwungmasse (11) greift, in welchem sie als Aufnahme (6) einer Lagerung (10) für die zweite Schwungmasse (11) wirksam ist, wobei an der Aufnahme (6) ein zumindest in diesem Bereich axial zwischen Kupplungsscheibe (32) und abtriebsseitiger Wand (19) der ersten Schwungmasse (1) greifender, nach radial außen verlaufender Momentenüberträger (58) vorgesehen ist, der an der sich an der zweiten Schwungmasse (11) abstützenden Federeinrichtung (15) in Anlage kommt.

2. Zweimassenschwungrad nach Anspruch 1 mit einem die abtriebsseitige Wand radial außen aufnehmenden, sich im wesentlichen axial in Richtung zur Getriebewelle erstreckenden Ansatz,
dadurch gekennzeichnet,
daß der Ansatz (3,9) die zweite Schungmasse (11) in Achsrichtung überragt.

3. Zweimassenschwungrad nach Anspruch 1,
dadurch gekennzeichnet,
daß die abtriebsseitige Wand (19) an der der Getriebewelle (35) zugewandten Seite der Kupplungsscheibe (32) als Lagerung (10) dient.

4. Zweimassenschwungrad nach Anspruch 1,
dadurch gekennzeichnet,
daß die Aufnahme (6) für die Lagerung (10) an der ersten Schwungmasse (1) durch eine Umbiegung (49) am radial inneren Ende der abtriebsseitigen Wand (19) in Richtung zur Kupplungsscheibe (32) gebildet wird.

5. Zweimassenschwungrad nach Anspruch 1,
dadurch gekennzeichnet,
daß die Lagerung (10) die zweite Schwungmasse (11) über die Gegendruckplatte (25) aufnimmt.

6. Zweimassenschwungrad nach Anspruch 1,
dadurch gekennzeichnet,
daß die Lagerung (10) die zweite Schwungmasse (11) über zumindest einen Planetenträger (67) eines als Zwischenmasse (76) wirksamen Planetengetriebes (75) aufnimmt.

7. Zweimassenschwungrad nach Anspruch 6,
dadurch gekennzeichnet,
daß der Planetenträger (67) einerseits mit der zweiten Schwungmasse (11) und andererseits mit der Gegendruckplatte (25) fest verbunden ist.

8. Zweimassenschwungrad nach Anspruch 1 und 7 mit zwei zueinander mit Axialversatz angeordneten Planetenträgern,
dadurch gekennzeichnet,
daß die Planetenträger (67) zusammen mit dem lagertragenden, radial inneren Bereich der abtriebsseitigen Wand (19) der ersten Schwungmasse (1) eine Fettkammer (22) für die Torsionsdämpfereinrichtung (20) bilden.

9. Zweimassenschwungrad nach Anspruch 1,
dadurch gekennzeichnet,
daß der abtriebsseitigen Wand (4,19) der ersten Schwungmasse (1) ein axial beabstandetes Deckblech (59) drehfest zugeordnet ist, das zusammen mit der Wand (19) und der Lagerung (10) eine Fettkammer (22) für die Torsionsdämpfereinrichtung (20) bildet.

10. Zweimassenschwungrad nach Anspruch 1 und 9,
dadurch gekennzeichnet,
daß das Deckblech (59) als Anlage für die mit der zweiten Schwungmasse (11) verbundene Gegendruckplatte (25) dient.

11. Zweimassenschwungrad nach Anspruch 1, bei dem zumindest eine der Schwungmassen (1,11) benachbart zu den Reibbelägen (33) der Kupplungsscheibe (32) wenigstens eine Ausnehmung (52) für Abrieb der Reibbeläge (33) aufweist,
dadurch gekennzeichnet,
daß die Ausnehmung (52) als Kammer (53) in die jeweilige Schwungmasse (11) eingearbeitet ist, wobei das Kammervolumen der maximal entstehenden Abriebmenge angepaßt ist.

12. Zweimassenschwungrad nach Anspruch 11,
dadurch gekennzeichnet,
daß der Ausnehmung (52) ein Leitblech (80) für vom Reibbelag (33) der Kupplungscheibe (32) gelösten Abtrieb zugeordnet ist.

13. Zweimassenschwungrad nach Anspruch 1,
dadurch gekennzeichnet,
daß die an der zweiten Schwungmasse (11) ausgebildete Abstützung (38) angrenzend an die erste Schwungmasse (1) nach radial innen greifende Vorsprünge (40) zur Anlagerung der Anpreßfeder (42) mit deren von der Druckplatte (24) abgewandten Seite aufweist.

## Claims

1. Dual-mass flywheel with a first flywheel mass (1) on the drive side and a second flywheel mass (11) rotationally mounted opposite to this on the output side, with a starting and selector clutch, which is fitted with a clutch disc (32), which preferably has its bearing point on a gear shaft (35) on the output side and when engaged stands under the effect of a pressure spring (42) acting on a pressure plate (24) in the direction facing a counterpressure plate (25), and also with a releasing device (36) for cancelling the effect of the pressure spring (42), and with a torsion damping means (20) with at least one spring arrangement (15) arranged between the flywheel masses (1, 11), whereby the second flywheel mass (11) is provided to receive at least one of the plates movable synchronously in relation to one another in circumferential direction, such as the pressure plate (24) or counterpressure plate (25), to form a module-type unit (93), and the pressure plate (24) forms the plate on the drive side whereas the counterpressure plate (25) forms the plate on the output side, the pressure spring (42) is arranged on the drive side in axial direction between the first flywheel mass (1) and the pressure plate (24) and is supported at a support (38) of the second flywheel mass (11), serving to act upon the pressure plate (24) with an axial force in a direction facing the gear shaft (35), and the releaser means (82) has a releasing device (36), which penetrates radially inside the bearing point of the clutch disc (32) towards the first flywheel mass (1) and may be brought into active connection with the pressure spring (42), characterised in that in the circumferential region, the first flywheel mass (1) has a wall (19) running essentially radially inwards on the output side on its end on the gear shaft side, said wall penetrating into a region radially inside the second flywheel mass (11), in which it is effective as a receiving means (6) of a bearing (10) for the second flywheel mass (11), whereby a moment transfer means (58), which at least in this region engages axially between the clutch disc (32) and the wall (19) of the first flywheel mass (1) on the output side and runs radially outwards, is provided on the receiving means (6) and comes into abutment against the spring arrangement (15) supported against the second flywheel mass (11).

2. Dual-mass flywheel according to Claim 1 with a projection, which receives the wall on the output side radially outwards and extends essentially axially towards the gear shaft, characterised in that the projection (3, 9) projects above the second flywheel mass (11) in axial direction.

3. Dual-mass flywheel according to Claim 1, characterised in that the wall (19) on the output side serves as bearing (10) on the side of the clutch disc (32) facing the gear shaft (35).

4. Dual-mass flywheel according to Claim 1, characterised in that the receiving means (6) for the bearing (10) on the first flywheel mass (1) is formed by a bend (49) on the radially inside end of the wall (19) on the output side towards the clutch disc (32).

5. Dual-mass flywheel according to Claim 1, characterised in that the bearing (10) receives the second flywheel mass (11) via the counterpressure plate (25).

6. Dual-mass flywheel according to Claim 1, characterised in that the bearing (10) receives the second flywheel mass (11) via at least one planet carrier (67) of a planetary gear (75) effective as intermediate mass (76).

7. Dual-mass flywheel according to Claim 6, characterised in that the planet carrier (67) is firmly connected on one side to the second flywheel mass (11) and on the other side to the counterpressure plate (25).

8. Dual-mass flywheel according to Claims 1 and 7 with two planet carriers axially displaced relative to one another, characterised in that the planet carriers (67), together with the radially inside region of the wall (19) of the first flywheel mass (1) on the output side carrying the bearing, form a grease chamber (22) for the torsion damping means (20).

9. Dual-mass flywheel according to Claim 1, characterised in that an axially spaced cover plate (59) is allocated in a rotationally fixed manner to the wall (4, 19) of the first flywheel mass (1) on the output side, said cover plate, together with the wall (19) and the bearing (10), forming a grease chamber (22) for the torsion damping means (20).

10. Dual-mass flywheel according to Claims 1 and 9, characterised in that the cover plate (59) serves as an abutment for the counterpressure plate (25) connected to the second flywheel mass (11).

11. Dual-mass flywheel according to Claim 1, in which at least one of the flywheel masses (1, 11) adjacent to the friction linings (33) of the clutch disc (32) has at least one recess (52) for abrasion of the friction linings (33), characterised in that the recess (52) is incorporated into the respective flywheel mass (11) as a chamber (53), the chamber volume being adapted to the resulting maximum amount of abrasion.

12. Dual-mass flywheel according to Claim 11, characterised in that a baffle plate (80) is allocated to the recess (52) for abrasion detached from the friction lining (33) of the clutch disc (32).

13. Dual-mass flywheel according to Claim 1, characterised in that the support (38) constructed on the second flywheel mass (11) has projections (40) extending radially inwards and adjoining the first flywheel mass (1) for support of the pressure spring (42) at its side facing away from the pressure plate (24).

## Revendications

1. Volant d'inertie à deux masses qui comprend une première masse d'inertie (1), située du côté du moyen d'entraînement et une deuxième masse d'inertie (11) située du côté de la sortie de la transmission, montée de façon à pouvoir tourner par rapport à la première, un embrayage de démarrage et de commande, qui est pourvu d'un disque d'embrayage (32), qui présente son point d'appui de préférence sur un arbre de boîte de vitesse (35) situé du côté de la sortie de la transmission et en position enclenchée se trouve sous l'action d'un ressort de pressage (42) qui comprime un plateau de pression (24) dans la direction tournée vers un plateau de contre-pression (25), ainsi qu'un dispositif de désenclenchement (36) qui sert à supprimer l'action du ressort de pressage (42), et un dispositif amortisseur de torsions (20) avec au moins un système à ressort (15), qui est disposé entre les masses d'inertie (1, 11), la deuxième masse d'inertie (11) étant prévue pour recevoir de façon solidaire en rotation au moins l'un des plateaux qui sont mobiles de façon synchrone dans le sens périphérique l'un par rapport à l'autre, tel que le plateau de pression (24) ou le plateau de contre-pression (25) pour former une unité de type modulaire (93) et le plateau de pression (24) étant le plateau situé du côté du moyen d'entraînement, le plateau de contre-pression (25) étant par contre le plateau situé du côté de la sortie de la transmission, le ressort de pressage (42) étant disposé du côté du moyen d'entraînement dans le sens axial entre la première masse d'inertie (1) et le plateau de pression (24) et étant monté sur un appui (38) de la deuxième masse d'inertie (11), servant à solliciter le plateau de pression (24) avec une force axiale dans une direction tournée vers l'arbre de la boîte de vitesse (35), et l'organe de désenclenchement (82) passant radialement à l'intérieur du point d'appui du disque d'embrayage (32) en direction de la première masse d'inertie (1) et présentant un dispositif de désenclenchement (36), qui peut être mis en liaison opérationnelle avec le ressort de pressage (42),
caractérisé en ce que
la première masse d'inertie (1) présente dans la zone périphérique à son extrémité située du côté de l'arbre de la boîte de vitesse une paroi (19) située du côté de la sortie de la transmission, qui s'étend sensiblement radialement vers l'intérieur et qui vient en prise dans une zone radialement à l'intérieur de la seconde masse d'inertie (11), dans laquelle elle est opérationnelle comme logement (6) d'un montage (10) pour la deuxième masse d'inertie (11), un organe de transmission de couple (58) étant prévu sur le logement (6) qui vient en prise au moins dans cette zone axialement entre le disque d'embrayage (32) et la paroi située du côté de la sortie de la transmission (19) de la première masse d'inertie (1), et s'étendant radialement vers l'extérieur, organe de transmission de couple (58) qui vient en appui sur le dispositif à ressort (15) qui prend appui sur la deuxième masse d'inertie (11).

2. Volant d'inertie à deux masses selon la revendication 1, avec un appendice qui reçoit la paroi situé du côté de la sortie de la transmission radialement à l'extérieur et qui s'étend de façon sensiblement axiale en direction de l'arbre de la boîte de vitesse,
caractérisé en ce que
l'appendice (3, 9) dépasse la deuxième masse d'inertie (11) dans le sens axial.

3. Volant d'inertie à deux masses selon la revendication 1,
caractérisé en ce que
la paroi (19), située du côté de la sortie de la transmission, sert de montage (10) sur le côté du disque d'embrayage (32), qui est tourné vers l'arbre de la boîte de vitesse (35).

4. Volant d'inertie à deux masses selon la revendication 1,
caractérisé en ce que
le logement (6) pour le montage (10) est formé sur ma première masse d'inertie (1) par un recourbement (49) à l'extrémité radialement intérieure de la paroi (19) située du côté de la sortie de la transmission en direction du disque d'embrayage (32).

5. Volant d'inertie à deux masses selon la revendication 1,
caractérisé en ce que
le montage (10) reçoit la deuxième masse d'inertie (11) au moyen du plateau de contre-pression (25).

6. Volant d'inertie à deux masses selon la revendication 1,
caractérisé en ce que
le montage (10) reçoit la deuxième masse d'inertie (11) au moyen d'au moins un support planétaire (67) d'un train planétaire (75) fonctionnant comme masse intermédiaire (76).

7. Volant d'inertie à deux masses selon la revendication 6,
caractérisé en ce que
le support planétaire (67) est relié de façon solidaire d'une part à la deuxième masse d'inertie (11) et d'autre part à la plateau de contre-pression (25).

8. Volant d'inertie à deux masses selon les revendications 1 et 7, avec deux supports planétaires disposés avec leurs axes décalés l'un par rapport à l'autre,
caractérisé en ce que
les supports planétaires (67) forment en même temps que la zone qui porte le montage, radialement intérieure de la paroi (19), située du côté de la sortie de la transmission, de la première masse d'inertie (1) une chambre à graisse (22) pour le dispositif amortisseur de torsions (20).

9. Volant d'inertie à deux masses selon la revendication 1,
caractérisé en ce que
l'on associe à la paroi située du côté de la sortie de la transmission (4, 19) de la première dispositif amortisseur de torsions (1) de façon solidaire en rotation une tôle de recouvrement (59) située axialement à une certaine distance, tôle de recouvrement qui en même temps que la paroi (19) et le montage (10) forme une chambre à graisse (22) pour le dispositif amortisseur de torsions (20).

10. Volant d'inertie à deux masses selon les revendications 1 et 9,
caractérisé en ce que
la tôle de recouvrement (59) sert d'appui pour le plateau de contre-pression (25) relié à la deuxième masse d'inertie (11).

11. Volant d'inertie à deux masses selon la revendication 1, dans lequel au moins l'une des masses d'inertie (1, 11) présente au voisinage des garnitures de friction (33) du disque d'embrayage (32) au moins un évidement (52) pour les produits abrasifs des garnitures de friction (33),
caractérisé en ce que
l'évidement (52) est usiné comme chambre (53) dans la masse d'inertie (11) correspondante, le volume de la chambre étant adapté à la quantité maximale de produits abrasifs qui se forme.

12. Volant d'inertie à deux masses selon la revendication 11,
caractérisé en ce que
l'on associe à l'évidement (52) une tôle de guidage (80) pour les produits abrasifs qui se détachent de la garniture de friction (33) du disque d'embrayage (32).

13. Volant d'inertie à deux masses selon la revendication 1,
caractérisé en ce que
l'appui (38), qui est constitué sur la deuxième masse d'inertie (11), présente de façon adjacente à la première masse d'inertie (1) des saillies (40) venant en prise radialement vers l'intérieur pour le montage du ressort de pressage (42) par son côté situé à l'opposé de la plateau de pression (24).
